(19) Europäisches Patentamt
European Patent Office
Office européen des brevets

(11) Publication number: **0 430 439 A2**

(12) **EUROPEAN PATENT APPLICATION**

(21) Application number: **90311802.4**

(22) Date of filing: **29.10.90**

(51) Int. Cl.5: **B29C 67/20**, B29C 47/12, B29C 47/00

(30) Priority: **21.11.89 GB 8926322**

(43) Date of publication of application: **05.06.91 Bulletin 91/23**

(84) Designated Contracting States: **AT BE CH DE DK ES FR GB GR IT LI LU NL SE Bulletin**

(71) Applicant: **IMPERIAL CHEMICAL INDUSTRIES PLC**
**Imperial Chemical House, 9 Millbank**
**London SW1P 3JF(GB)**

(72) Inventor: **Birch, Robin David**
**19 Paul's Rise, Woodchester**
**Stroud, Glocestershire(GB)**
Inventor: **Artus, Kevin James**
**10 Snowdrop Close**
**Abbeymead, Gloucestershire GL4 7DZ(GB)**

(74) Representative: **Hulse, Raymond et al**
**Imperial Chemical Industries PLC Legal Department: Patents PO Box 6 Bessemer Road**
**Welwyn Garden City Hertfordshire AL7 1HD(GB)**

(54) **Extruded structure.**

(57) A method of producing a porous structure in which a blend of a first thermoplastic polymer and a second, immiscible, thermoplastic polymer is extruded through a die into a structure shaving the desired cross section in which the polymers are present in the structure as interpenetrating networks and leaching out with a solvent for the immiscible polymer that network formed by the immiscible polymer so producing a porous structure comprising the first polymer network characterised in that a perforate barrier plate is interposed in the flow path of the blend prior to its passage out of the die.

EP 0 430 439 A2

## EXTRUDED STRUCTURE

This invention relates to an extruded structure and more particularly to such a structure having high porosity. The structure may be tubular or it may have a rectangular or other cross section.

European Patent Application No 88301982 (Imperial Chemical Industries PLC) is concerned with a method of producing a low density, porous, film or tape by melt spinning a blend of a thermoplastic polymer and another thermoplastic polymer into a film or tape and then leaching away the other polymer using a suitable solvent. The film produced, being highly porous, may be used for a variety of end uses including a filtration or separation medium.

United States Patent Serial No 4,755,540 (Raychem Limited) describes a method of making a polyaryletherketone porous membrane, comprising the steps of:

(a) providing a mixture of a first polymeric material, which is a polyaryletherketone, and a second polymeric material, which is partially incompatible with said first polymeric material;

(b) forming said mixture into a film; and

(c) extracting from said film at least a substantial portion of said second polymeric material by means of a liquid which does not dissolve said first polymeric material.

European Patent Specification 0164235 (Imperial Chemical Industries PLC) describes a melt spun tube having two polymeric fibrous components and containing from 30 to 70 parts by weight of a first component and from 70 to 30 parts by weight of a second component, each component being present in the tube wall as fibrils which are substantially aligned to the axis of the tube, the aligned fibrils being interconnected to each other in a random manner, the interconnections penetrating through the fibrils of the other component such that both components exist in the tube wall as interpenetrating networks. A feature of the tube is that one of the two interpenetrating networks forming the tube wall can be leached out of the tube wall by a suitable solvent so producing a highly porous tube having a wall comprising the other polymer network. Such a porous tube can be used to advantage in the construction of a membrane.

When the above described porous structures are to be used as membranes then they are required to have a sufficiently high strength to withstand liquid or gaseous pressures applied across the structures.

In United States Patent Serial No 4,755,540 mention is made that lack of strength may be compensated for by the membrane carrying reinforcing fibres eg. a web or net of polymer and/or by laminating together two or more such membranes having a directionally oriented lack of strength with their low-strength directions differently aligned or by heat sealing the membrane, preferably in an open grid pattern to provide strengthened seal lines with interspersed areas of unsealed membrane having the original porosity and performance characteristics.

No provision is made in any of the other structures described above to improve the burst strength thereof. The lack of high burst strength in the porous tubes made according to the teaching of European Patent Specification 0164235 is very apparent.

This is particularly so when the two polymeric components used have a high viscosity, for example when one polymeric component is polyetheretherketone and the other polymeric component is polyethersulphone, which prevents the flow lines of the blended polymers entering the extruder die from being intimately mixed so resulting in structural weaknesses in the extruded tube.

According to the present invention we provide an extruded porous structure comprising at least one area of lower porosity extending throughout the length of the structure and at least one area of higher porosity extending throughout the length of the structure.

In one embodiment of the invention areas of lower porosity are interspersed with areas of higher porosity.

In another embodiment the structure is tubular and comprises one or more ring-like areas of lower porosity and one or more concentric ring-like areas of higher porosity.

According to the method of the invention we provide a method of producing a porous structure in which a blend of a first thermoplastic polymer and a second, immiscible, thermoplastic polymer is extruded through a die into a structure having the desired cross section in which the polymers are present in the structure as interpenetrating networks and leaching out with a solvent for the immiscible polymer that network formed by the immiscible polymer so producing a porous structure comprising the first polymer network characterised in that a perforate barrier plate, as herein defined, is interposed in the flow path of the blend prior to its passage out of the die.

The perforate barrier plate used in the method of the invention may be a perforated solid plate having perforations of any suitable shape or a mesh or gauze having any suitable construction or a plurality of superimposed meshes or gauzes or a single loop of wire. The perforate barrier plate may or may not have

uniform perforations.

We have found that when such barrier plates are interposed in the flow path of a blend (comprising equal proportions of two polymers of differing melt viscosities) before it passes out of the die, those areas of the extrusion on the downstream side of the solid regions of the barrier plate tend to have a predominance of the higher melt viscosity component in the blend in contrast to the remaining areas of the extrusion which tend to have a predominance of the lower melt viscosity component in the blend. This phenomenon also occurs with blends containing different proportions of the two polymers to the extent that those areas on the downstream side of the solid regions of the barrier plate are enriched by the higher melt viscosity component and the remaining areas of the extrusion are enriched by the lower melt viscosity component.

In consequence, if it is arranged that the first polymer in the blend has a higher melt viscosity than the second polymer in the blend at the shear rate experienced over the barrier plate then, when the second, ie the immiscible, polymer is leached out from the extrusion, those regions of the extrusion formed on the downstream side of the solid regions in the barrier plate are found to have a denser structure ie a lower porosity.

Such denser regions which extend the length of the extrusion serve to strengthen the porous structure. Furthermore they serve to provide an effective reduction in the transverse porosity of the structure which can be useful when it is required to use the structure as a membrane.

The invention also includes an apparatus for producing an extruded structure from a polymer blend including a bridge plate and a die plate, means for attaching the bridge plate and die plate together, means for supplying a polymer blend through a number of conduits located in the bridge plate to a die located in the die plate characterised in that a perforate barrier plate, as herein defined, is interposed between the outlets from the polymer blend supply conduits and the die. When the barrier plate is in the form of a single loop or wire then means will be required to support such loop of wire in a suitable location between the outlets from the supply conduits and the die.

When the apparatus is to be used to produce a tubular structure then the apparatus will also include a conduit passing through the bridge plate for supplying an inert gas to a location centrally of the die.

As examples of polymers of which the membrane may be made are inter alia polymers and copolymers of the general formulae I-VII.

PEEK 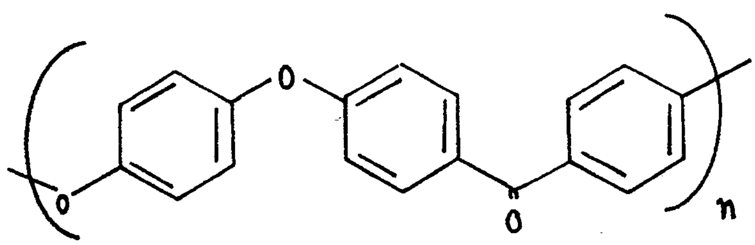 I

PEK 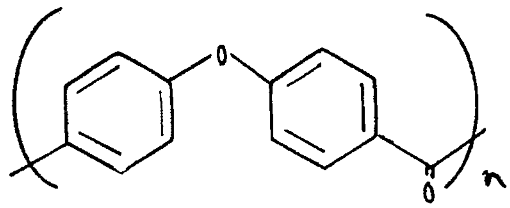 II

PEKK 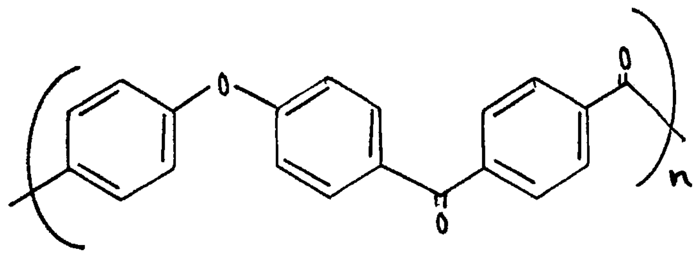 III

PEEKEK IV

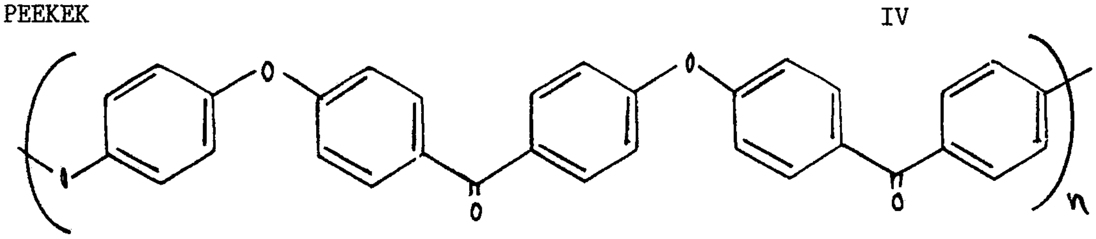

PEDEK 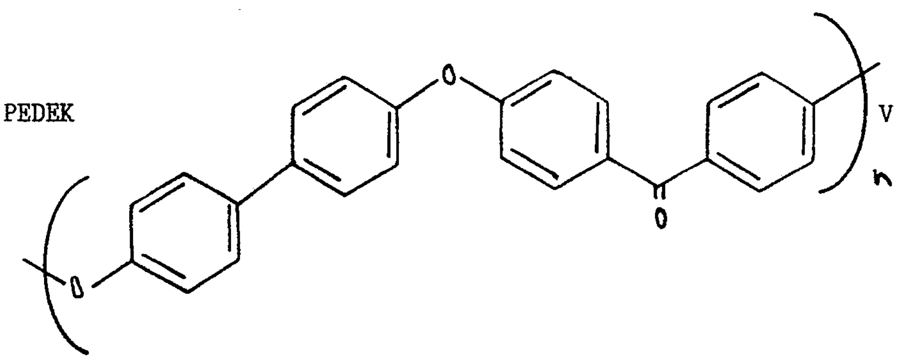 V

Whereas the polymer is preferably a homopolymer, e.g. PEEK or PEK, we do not exclude the possibility that it may be a copolymer e.g. PEEK/PEK, PEEK/PES, PEK/PES, PEEK/PEES, wherein the copolymer units are represented by the following formulae:

PES 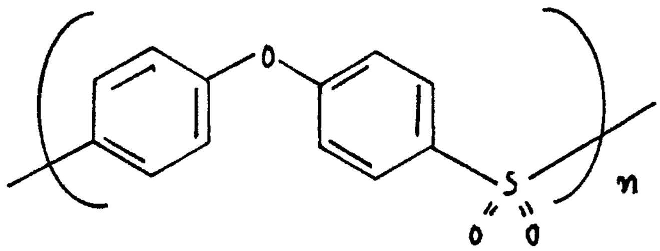 VI

PEES 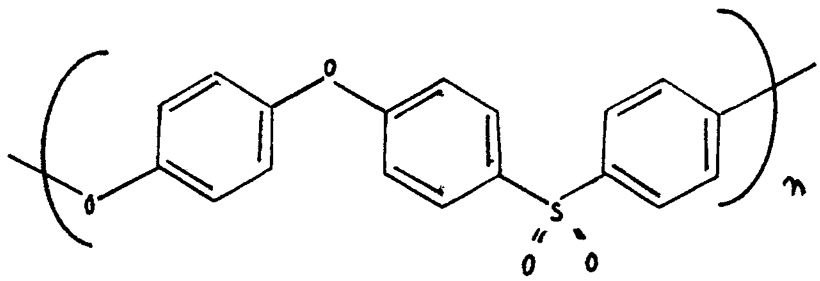 VII

Each such polymer-type is hereinafter referred to for convenience by the trivial name appended hereinbefore appended thereto.

Alternatively the membrane may be made of polypropylene (using, for example, a polyurethane as the immiscible polymer) or nylon (using, for example, polypropylene as the immiscible polymer) or a polymer based on a thioketone.

When we use the term "melt viscosity" herein in relation to the first polymer and the second, immiscible, polymer (except insofar as we refer to melt viscosity between page 3, line 22 and page 4, line 7 and elsewhere in the context of melt viscosity at the shear rate experienced over the barrier plate) we mean the melt viscosity of the polymer at the temperature of extrusion and during those shear conditions to which the polymer is subjected during extrusion.

The process of the invention as used to produce a tubular structure will now be described by way of examples and with reference to the accompanying drawings in which:-

Fig 1 shows a vertical section through a portion of one apparatus used,

Fig 2 shows in more detail the area circled in Fig 1,

Fig 3 shows a horizontal section through the barrier plate depicted in Figs 1 and 2, and

Fig 4 - 12 are scanning electron microscope (SEM) micrographs.

The apparatus which is shown in Figs 1, 2 and 3 comprises a bridge plate 1 and a die plate 2. Passing through the bridge plate is a right angled conduit 3 (vertical leg shown) through which an inert gas can be supplied centrally of the die 4 and conduits 5 through which a polymer blend after leaving the sand pack (not shown) passes to the outside of the die 4. Before entering the die, the polymer blend is retained temporarily in a sump 6. At the bottom of the sump is located a mesh barrier plate 7 through which the polymer blend passes before entering the die.

In the following examples, which are concerned with the production of a tubular structure, a small screw extruder having a 22 mm diameter screw and length to diameter ratio of 22 to 1 was used in conjunction with a standard sand pack and annular die. The die had an inner dimension of 2.2 mm and an annular gap of 0.18 mm. More details of the die, die plate and bridge plate are to be found in Figs 1, 2 and 3.

COMPARATIVE EXAMPLE

A blend was formed from 50% by weight of PEEK grade 450G having a melt viscosity of 1930 poise and 50% by weight of PES grade 3600G having a melt viscosity of 1230 poise. Both polymers are available from ICI Advanced Materials.

Prior to blending, each polymer was dried under vacuum for a minimum of 12 hours at 110 degrees C. The dried polymers were gravity mixed prior to being added to the feed hopper of the extruder. The blend was extruded through an annular die at a throughput of 7-9 grammes a minute and at a temperature of 380 degrees C. The annular die had an inner diameter of 2.2 mm and an annular gap of 0.18 mm. A nitrogen feed was supplied to the inside of the annular die at a rate commensurate with producing tubes with good

wall concentricity and dimensional uniformity. The extruded tubes had an outer diameter of 2-3 mm and a wall thickness of 250 micrometers. The tubes were quenched using a conventional air quench.

Short lengths of tube were immersed in boiling dimethylformamide for two hours and dried under vacuum at 95 degrees C for 8 hours and found to have lost 98% of the PES component. Figures 4 and 5 show cross-sections of the tube wall after leaching.

Samples of the hollow tube were sealed at one end with the aid of epoxy resin and the free end connected to a nitrogen gas feed. The tubes were immersed completely in water and the nitrogen feed pressure was increased until bubbles were observed on the surface of the tube. At a differential membrane pressure of 0.2 bar gauge, bubbles of gas were seen to form only along longitudinal fault lines. The bubbles were of irregular size. The internal nitrogen gas pressure was then increased until the fibres burst at a differential membrane pressure of between 0.9 and 1.3 bar gauge. The samples burst along one or more of these fault lines.

INVENTION EXAMPLE 1

A blend was formed from 50% by weight of PEEK grade 450G having a melt viscosity of 1930 poise and 50% by weight of PES grade 3600G having a melt viscosity of 1230 poise. Both polymers are available from ICI Advanced Materials.

Prior to blending, each polymer was dried under vacuum for a minimum of 12 hours at 110 degrees C. The dried polymers were gravity mixed prior to being added to the feed hopper of the extruder. The blend was extruded through an annular die at a throughput of 7-9 grammes a minute and at a temperature of 380 degrees C. The same annular die was used as in the COMPARATIVE EXAMPLE, with the addition of a section of metal gauze in the position as described above. The gauze may be, for example, a 60 mesh screen (aperture 250 microns and a nominal wire diameter of 160-180 micrometers) made from stainless steel gauze or any other suitable material such as Hastelloy. A nitrogen gas feed was supplied to the inside of the annular die at a rate commensurate with producing tubes with good wall concentricity and dimensional uniformity. The extruded tubes had an outer diameter of 2-3 mm and a wall thickness of 250 micrometers. The tubes were quenched using a conventional air quench.

Short lengths of tube were immersed in boiling dimethylformamide for two hours and dried under vacuum at 95 degrees C for 8 hours and were found to have lost 90% of the PES component. Fig 6 clearly shows a PEEK rich network corresponding to the pattern of the gauze running through the wall of the tube. Figure 7 is a cross-section of the wall and shows a single shadow corresponding to the gauze wire in the centre of the photomicrograph.

Samples of the hollow tube were sealed at one end with the aid of epoxy resin and the free end connected to a nitrogen gas feed. The tubes were immersed completely in water and the nitrogen feed pressure was increased until bubbles were observed on the surface of the tube. No bubbles were observed up to a differential membrane pressure of 0.9 bar gauge, at which point the whole surface of the tube expressed bubbles simultaneously. All bubbles being of uniform size. No fault lines were observed. The tube samples withstood a differential membrane pressure in excess of 4 bar gauge.

It should be noted that in this Example the melt viscosities of PEEK and PES at the shear rates appertaining across the gauze are approximately 5,500 poise and 3,500 poise respectively.

INVENTION EXAMPLE 2

A blend was formed from 60% by weight of PEEK grade 150G having a melt viscosity of 720 poise and 40% by weight of PES grade 4800G having a melt viscosity of 1700 poise. Both polymers are available from ICI Advanced Materials.

Prior to blending, each polymer was dried under vacuum for a minimum of 12 hours at 110 degrees C. The dried polymers were gravity mixed prior to being added to the feed hopper of the extruder. The blend was extruded through an annular die at a throughput of 16 grammes a minute and at a temperature of 380 degrees C. The annular die had an inner diameter of 2.2 mm and a gap of 0.18 mm. The same annular die was used as in INVENTION EXAMPLE 1. A metal gauze of the type used in INVENTION EXAMPLE 1 and positioned in the same place as in INVENTION EXAMPLE 1 was used. A nitrogen feed was supplied to the inside of the annular die at a rate commensurate with producing tubes with good wall concentricity and dimensional uniformity. The extruded tubes had an outer diameter of 2-3 mm and a wall thickness of 250 micrometers. The tubes were quenched using a conventional air quench.

Short lengths of tube were immersed in boiling dimethylformamide for two hours and dried under vacuum at 95 degrees C for 8 hours and were found to have lost 92% of the PES component. Figure 8

shows the cross-section of the tube wall and clearly shows the effect of the gauze. The less dense regions associated with the gauze wires results from the higher viscosity PES taking up the corresponding PEEK position of INVENTION EXAMPLE 1, which on leaching leaves a network of larger pores.

It should be noted that in this Example the melt viscosities of PEEK and PES at the shear rates appertaining across the gauze are approximately 1,700 poise and 5,300 poise respectively.

INVENTION EXAMPLE 3

A blend was formed from 40% by weight of PEK (grade KT 8) having a melt viscosity of approximately 900 poise and 60% by weight of PES grade 3600G having a melt viscosity of 1220 poise. Both polymers are available from ICI Advanced Materials.

Prior to blending, each polymer was dried under vacuum for a minimum of 12 hours at 110 degrees C. The dried polymers were gravity mixed prior to being added to the feed hopper of the extruder. The blend was extruded through an annular die at a throughput of 10 grammes a minute and at a temperature of 380 degrees C. The same annular die and gauze was used as in INVENTION EXAMPLE 1.

A nitrogen feed was supplied to the inside of the annular die at a rate commensurate with producing tubes with good wall concentricity and dimensional uniformity. The extruded tubes had an outer diameter of 2-3 mm and a wall thickness of 250 micrometers. The tubes were quenched using a conventional air quench.

Short lengths of tube were immersed in boiling dimethylformamide for two hours and dried under vacuum at 95 degrees C for 8 hours and were found to have lost 92% of the PES component. Figures 9 and 10 show the cross-section of the tube wall and clearly show the effect of the gauze.

It should be noted that in this Example the melt viscosities of PEK and PES at the shear rates appertaining across the gauze are approximately 1,100 poise and 3,300 poise respectively.

INVENTION EXAMPLE 4

A blend was formed from 53% by weight of nylon 66 (PA66) grade Nylon SC supplied by ICI Chemicals and Polymers Limited having a melt viscosity of 400 poise and 43% by weight of polypropylene (PP) grade PXC 31626 supplied by ICI Chemicals and Polymers Limited having a projected melt viscosity of 200 poise and 4% by weight of nylon 11 grade Rilsan supplied by Atochem Limited. Nylon 11 was included in the blend as a compatibiliser to stabilise the spinning conditions and at this low level would not be expected to substantially effect the melt viscosities of the principal components of the blend.

Prior to blending, the PA 66 was dried to an equilibrium moisture level. The other two components were dried under vacuum at 60° C for six hours. The dried polymers were gravity mixed prior to being added to the feed hopper of the extruder. The blend was extruded through an annular die at a throughput of 8 grammes a minute and at a temperature of 290 degrees C. The annular die had an inner diameter of 2.2 mm and a gap of 0.18 mm. The same annular die was used as in INVENTION EXAMPLE 1. A metal gauze of the type used in INVENTION EXAMPLE 1 and positioned in the same place as in INVENTION EXAMPLE 1 was used. A nitrogen feed was supplied to the inside of the annular die at a rate commensurate with producing tubes with good wall concentricity and dimensional uniformity. The extruded tubes had an outer diameter of 2-3 mm and a wall thickness of 250 micrometers. The tubes were quenched using a conventional air quench. The PP was removed from the tube wall by immersing the tube in boiling para xylene for 6 hours. The tube was then dried under vacuum for 16 hours at 80° C. The tube had lost 93% of the PP component and was stout and non-fibrous.

It should be noted that in this Example a melt viscosity inversion occurs as the blend enters the die ie. at the gauze the melt viscosity of the nylon 66 is approximately 700 poise and is lower than the melt viscosity (approximately 2000 poise) of the polypropylene. The reason this happens is that PP is more shear sensitive in respect of melt viscosity than nylon and the shear rate across the gauze is lower than that appertaining across the die.

Figures 11 and 12 show the cross-section of the tube wall and clearly shows the effect of the gauze. The less dense regions associated with the gauze wires results from the higher viscosity PP which on leaching leaves a network of larger pores.

INVENTION EXAMPLE 5

Example 4 was repeated in entirety except that the tube was immersed in formic acid at room temperature for one day. The tube was then dried under vacuum for 16 hours at 80° C. The tube had lost

92% of the nylon component and was stout and non-fibrous. In this particular case a PP rich network corresponding to the pattern of the gauze extended through the length of the wall of the tube.

## Claims

1. An extruded porous structure characterised by at least one area of lower poros ity extending throughout the length of the structure and at least one area of higher porosity extending throughout the length of the structure.

2. An extruded porous structure as claimed in Claim 1 characterised in that the area of lower porosity are interspersed with areas of higher porosity.

3. An extruded tubular structure as claimed in either Claim 1 or Claim 2 characterised by one or more ring-like areas of lower porosity and one or more concentric ring-like areas of higher porosity.

4. An extruded porous structure as claimed in any one of Claims 1 to 3 of a polymeric material selected from polyetheretherketone, polyetherketone, nylon and polypropylene.

5. A method of producing a porous structure in which a blend of a first thermoplastic polymer and a second, immiscible, thermoplastic polymer is extruded through a die into a structure having the desired cross section in which the polymers are present in the structure as interpenetrating networks and leaching out with a solvent for the immiscible polymer that network formed by the immiscible polymer so producing a porous structure comprising the first polymer network characterised in that a perforate barrier plate, as herein defined, is interposed in the flow path of the blend prior to its passage out of the die.

6. A method as claimed in Claim 5 in which the perforate barrier plate is a perforated solid plate.

7. A method as claimed in Claim 5 in which the perforate barrier plate comprises a mesh or gauze or a plurality of superimposed meshes or gauzes.

8. A method as claimed in Claim 5 in which the perforate barrier plate is a single loop of wire.

9. An apparatus for producing an extruded porous structure as claimed in Claim 1 including a bridge plate (1) and a die plate (2), means for attaching the bridge plate (1) and die plate (2) together, means for supplying a polymer blend through a number of conduits (5) located in the bridge plate (1) to a die (4) located in the die plate (2) characterised in that a perforate barrier plate (7), as herein defined, is interposed between the outlets from the polymer blend supply conduits (5) and the die (4).

Fig.1.

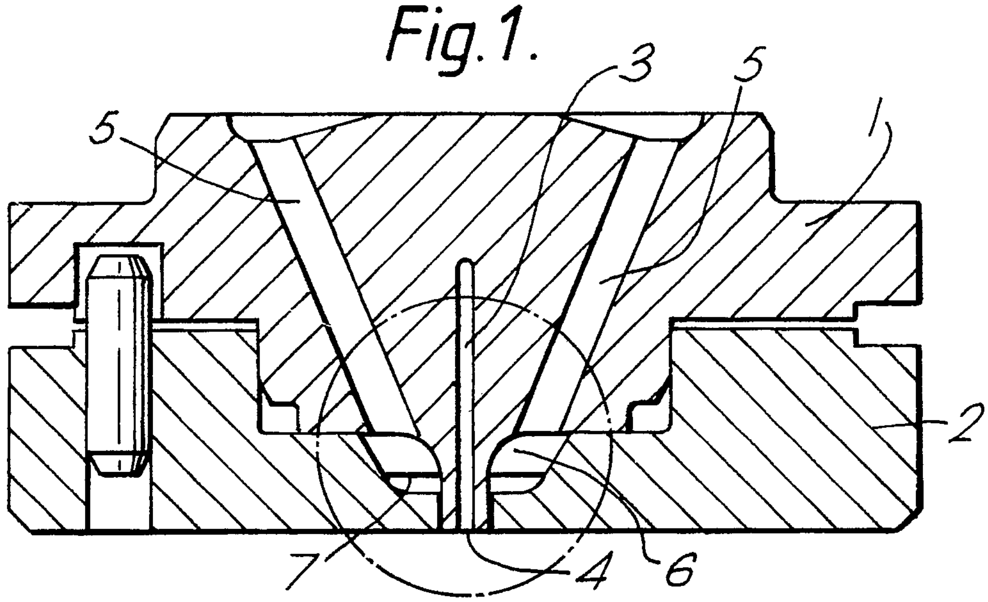


Fig.2.

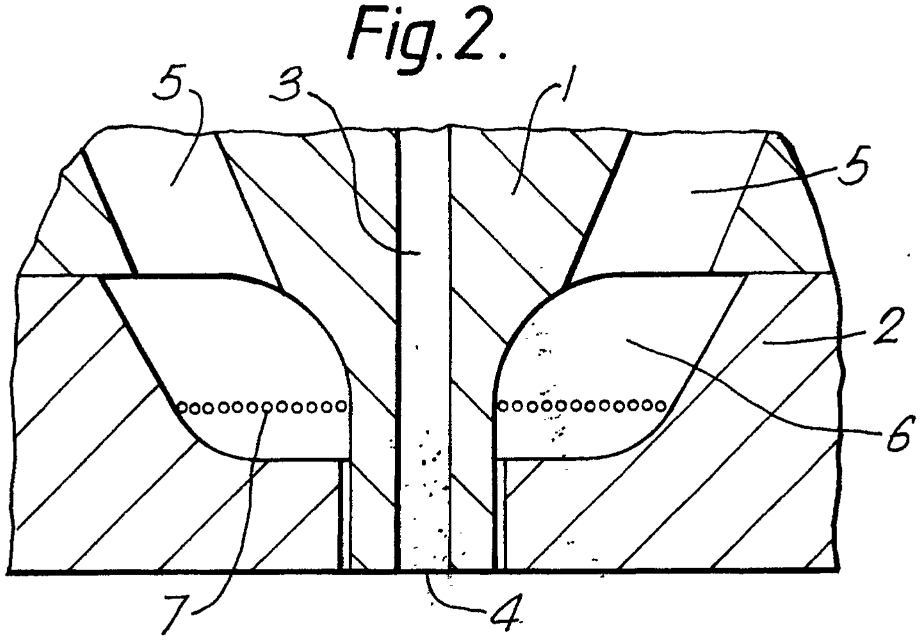


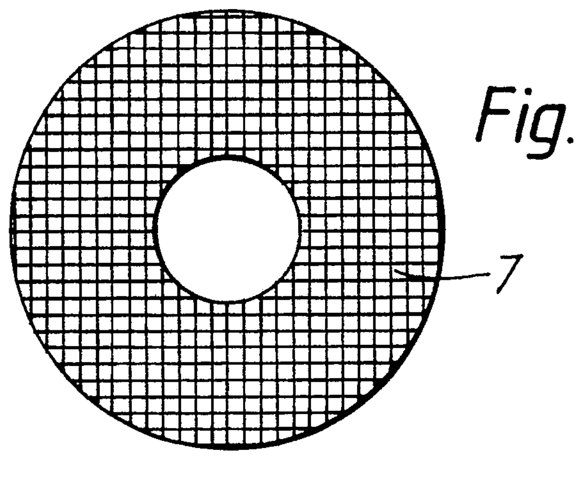


Fig.3.

FIG. 4

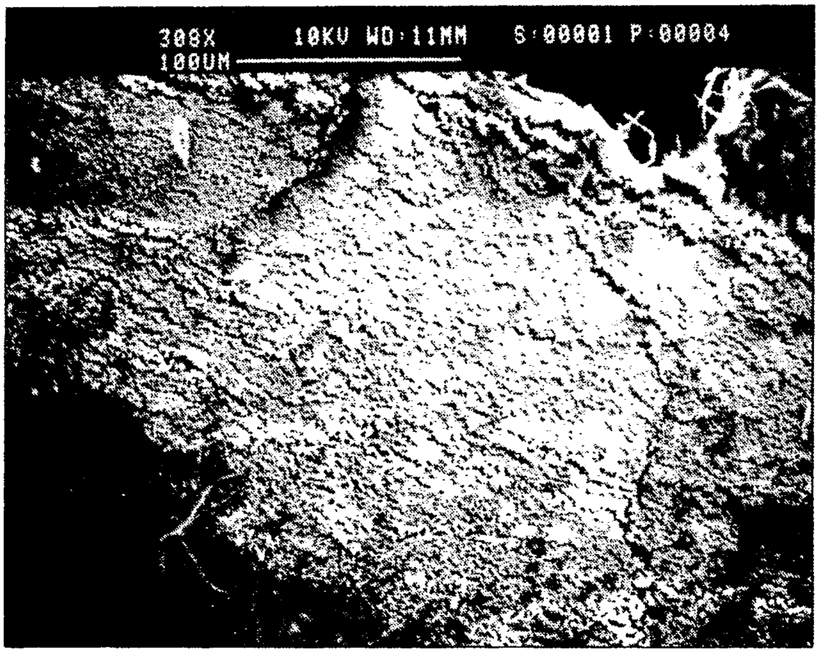
308X 10KU WD:11MM S:00001 P:00004
100UM

FIG. 5

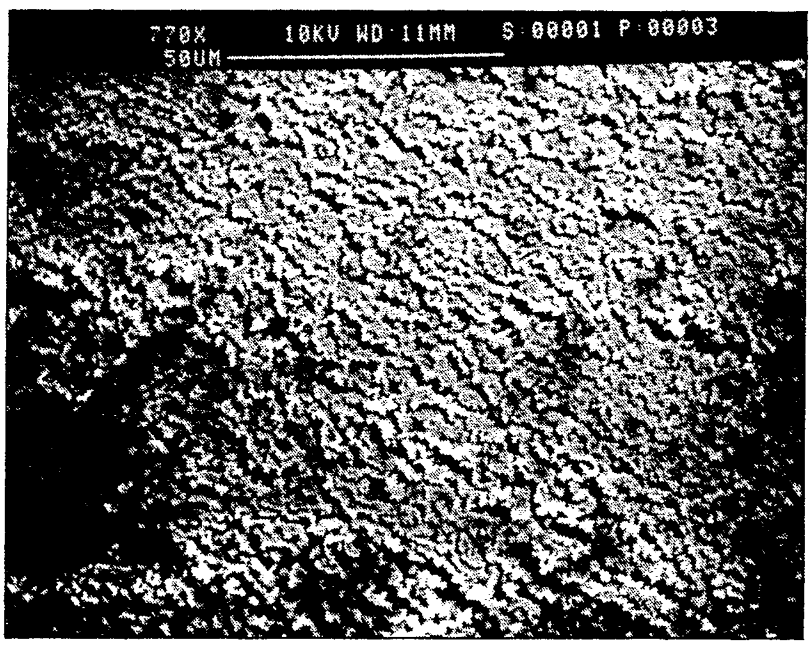
770X 10KU WD:11MM S:00001 P:00003
50UM

FIG. 6

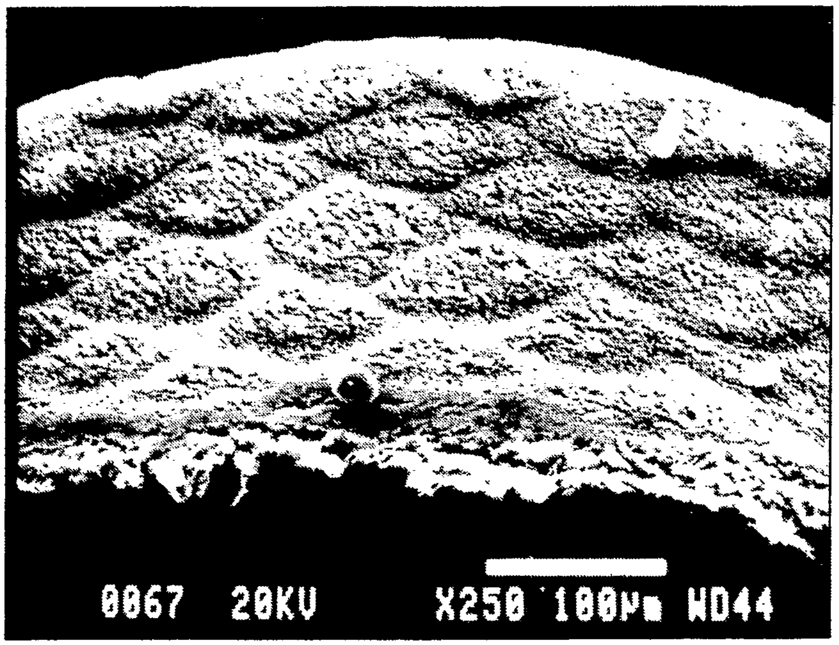
0067 20KV X250 100μm WD44

FIG. 7

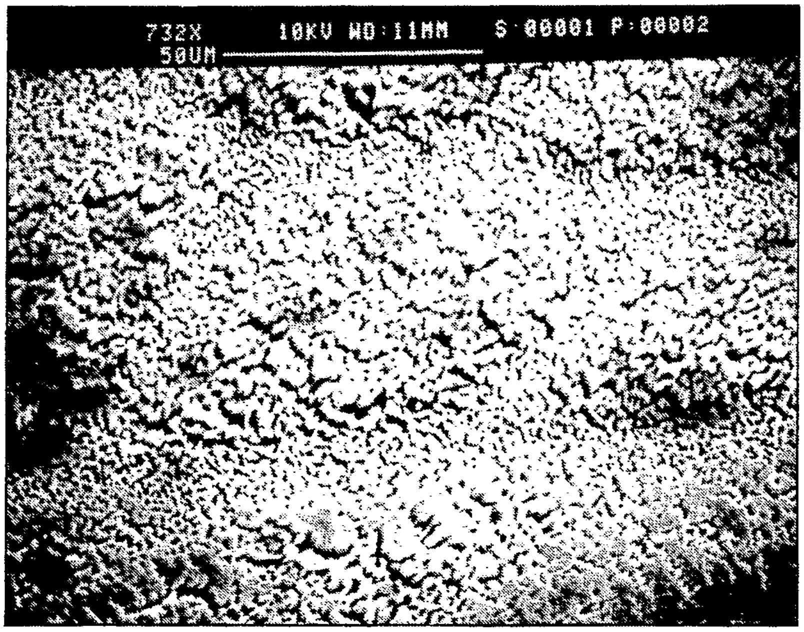
732X 10KV WD:11MM S:00001 P:00002
50UM

FIG. 8

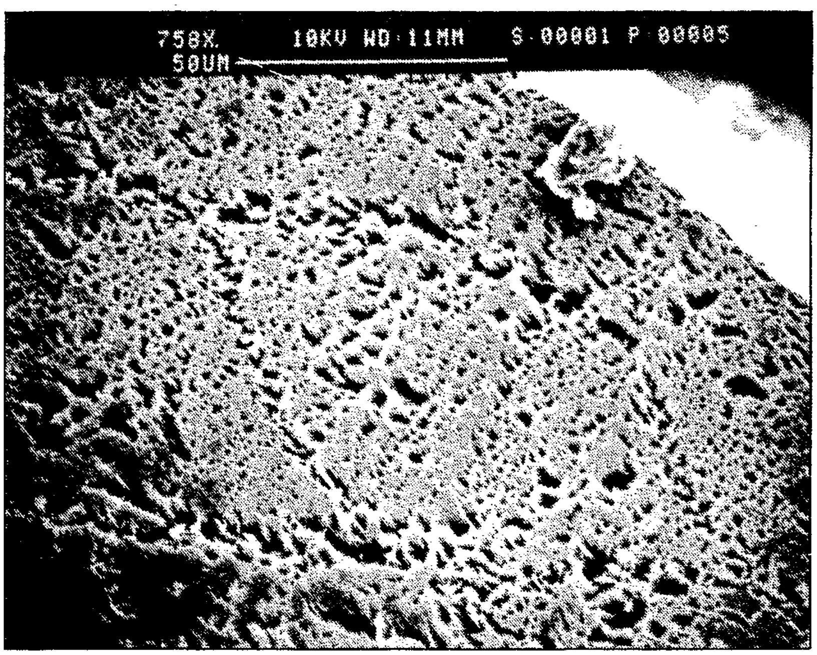
750X 10KV WD 11MM S 00001 P 00005
50UM

FIG. 9

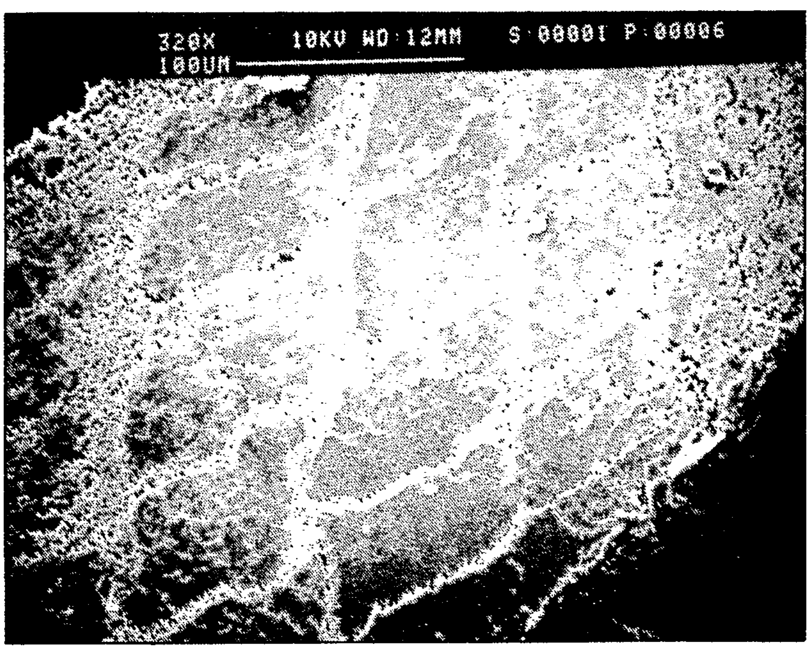
320X 10KV WD 12MM S 00001 P 00006
100UM

FIG. 10

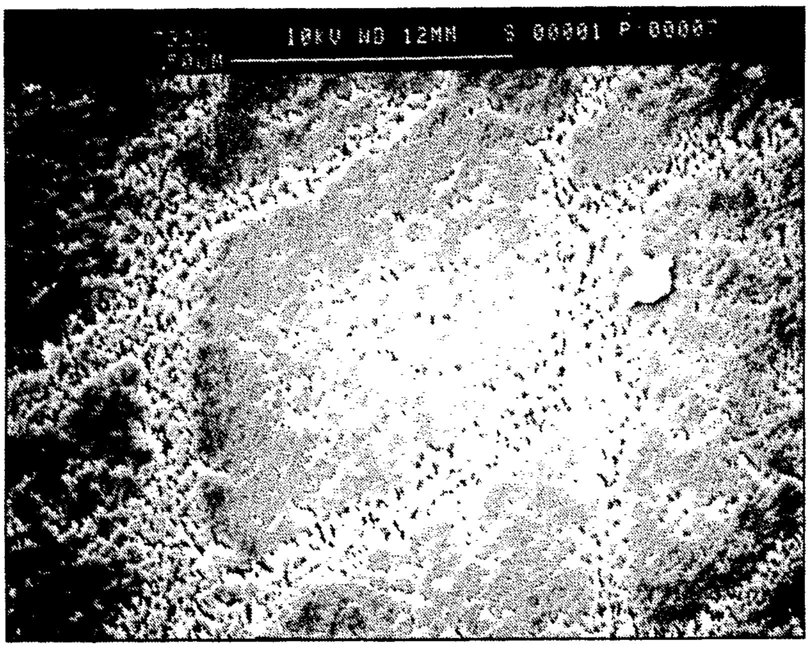

Fig.11.

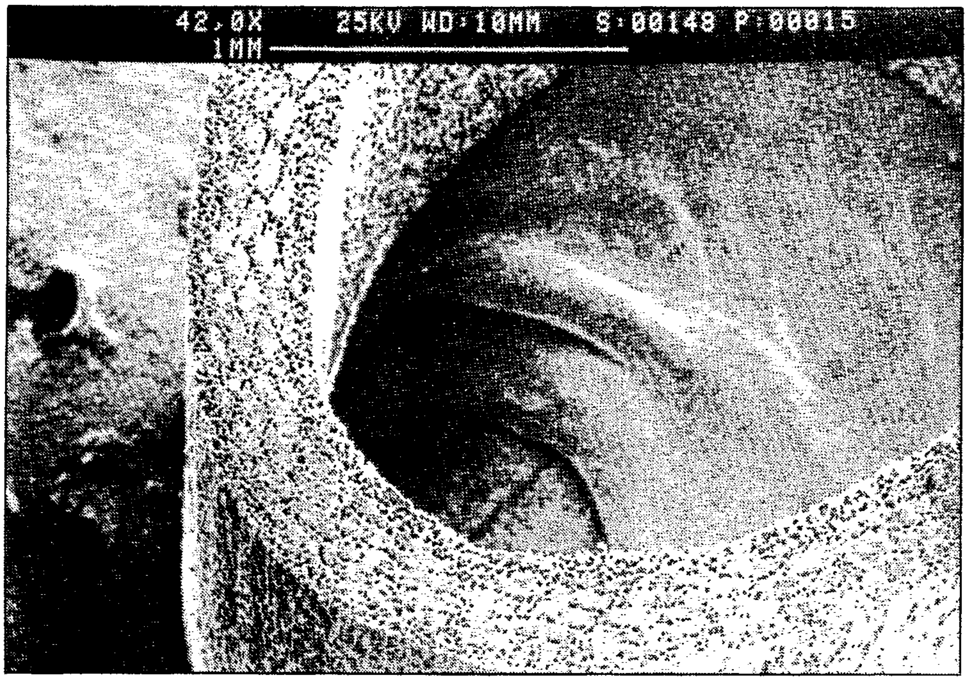
42,0X 25KV WD:10MM S:00148 P:00015
1MM

Fig.12.

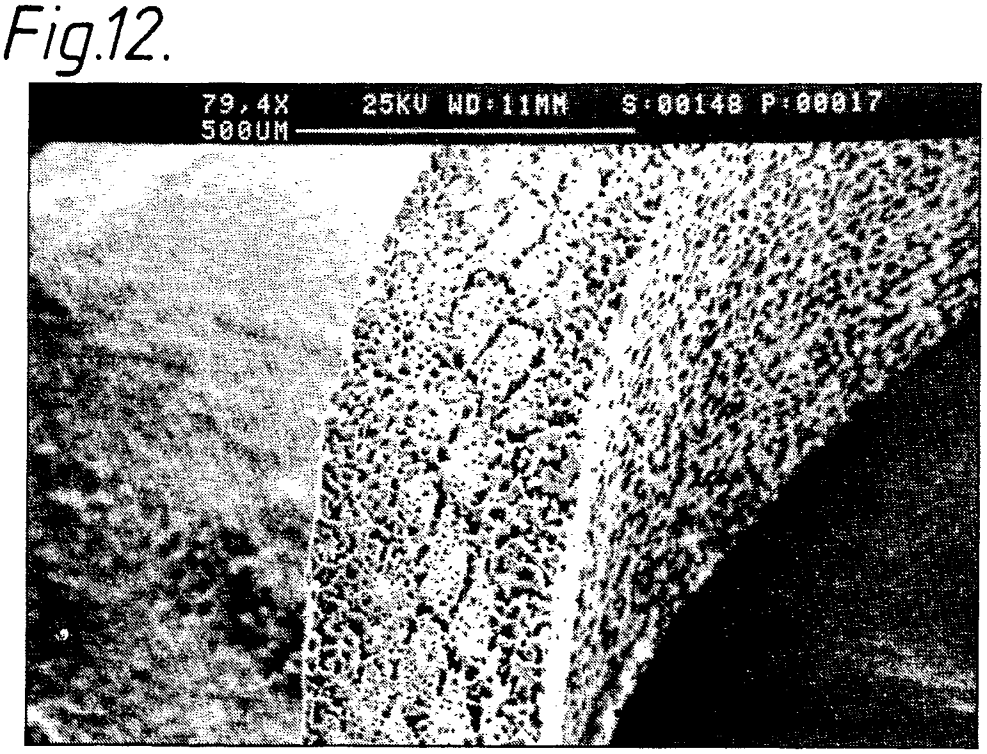
79,4X 25KV WD:11MM S:00148 P:00017
500UM